# EUROPEAN PATENT APPLICATION

(11) **EP 0 830 887 A1**
(43) Date of publication of application: **25.03.1998**
(21) Application number: 97116355.5
(22) Date of filing: 19.09.1997
(51) Int. Cl.: B01D 46/30, B05B 15/12

(54) **Process and installation of collection of polluting substances, pigments and/or overspray, solid and/or fluid, from fluid effluents**

(30) Priority: 20.09.1996 IT TO960772
(71) Applicant: Onida, Aldo, 10070 Villanova Canavese (Torino) (IT)
(72) Inventor: Onida, Aldo, 10070 Villanova Canavese (Torino) (IT)
(74) Representative: Aprà, Mario

(57) **Abstract**

In the process according to the invention, the fluid effluents are conveyed through at least one fixed collection bed (16), formed by a huge number of adjacent solid bodies (CS), so that pigments and/or overspray, solid and/or liquid, contained in the effluents themselves are collected on these solid bodies (CS), at least in part, while these effluents pass through this fixed collection bed.

The installation according to the invention comprises at least a fixed collection bed (16) with adjacent solid bodies (CS), formed preferably by at least one layer of solid micro-particles, favourably microspheres, on a support permeable by these fluid effluents.

## Description

The present invention relates to a process of collection of polluting substances, pigments and/or overspray, solid and/or fluid, from fluid effluents and its installation.

In many industrial processes (for example painting) throwaway filtering means are used to collect polluting substances, pigments and/or overspray contained in fluid effluents.

These filtering means, when exhausted, are treated as industrial wastes; this involves the continuous exchange and the consequent discharge of the exhausted filtering means, causing industrial costs and environmental damages (represented, for example, by the heap of filters to be discharged, apart from deposit of polluting substances, pigments and/or overspray captured by the filters themselves).

The main aim of this invention is to provide a process of collection of polluting substances, pigments and/or overspray, solid and/or fluid, from fluid effluents, efficient and safe, permitting the reutilisation of the collection means employed in the process itself.

Another aim is to provide an installation for the realization of the above-mentioned process, permitting an efficient and safe collection of polluting substances, pigments and/or overspray, solid and/or fluid, from fluid effluents, and all with considerably reduced industrial and environmental costs, if compared to traditional installations.

A further aim is to provide a process and an installation as above mentioned, permitting the realization of quantitative and qualitative controls of the industrial wastes produced by this collection in order to determine, for example, the toxicity and/or the polluting activity connected with the production cycles, from which those fluid effluents originate.

In view of these aims, the present invention provides a process of collection of polluting substances, pigments and/or overspray, solid and/or fluid, from fluid effluents, whose main characteristic is object of claim 1.

Besides, the present invention provides an installation for the realization of the above-mentioned process, whose characteristic is object of claim 12.

Further advantageous characteristics appear in the subordinate claims, which are also understood to be incorporated here in full. The present invention is described in detail in the following, in an exemplifying form of realization of the installation, with reference to the attached drawings,which are provided by way of non-limiting example only, in which:
- fig. N° 1 is a schematic view, vertical section, showing a spray booth, including a first part of the installation for the realization of the process according to this invention;
- fig. N° 2 is a detailed view, on a larger scale, of particular II of fig. 1;
- fig. N° 3 is a diagrammatic perspective view showing another part of the installation for the realization of the process according to this invention.

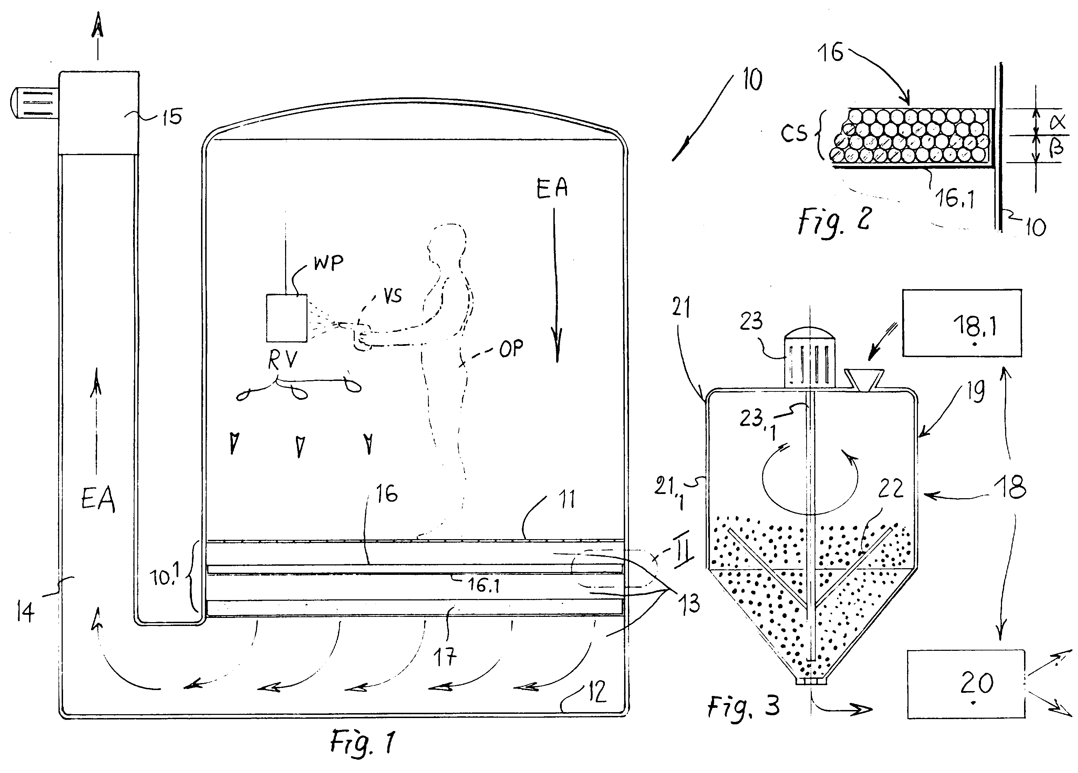

Referring to drawings, 10 in fig. N° 1 indicates a conventional spray booth, in which an operator OP, by spray means VS, applies the paint (composed, for example, by pigments in a liquid solvent) on a work piece WP. The spray booth 10 presents a perforated flooring, raised compared to a cement floor 12, in order to provide an air tube 13 between the flooring and the cement floor.

A vent stack 14 is put in communication of fluid with this air tube 13, so that through an aspirator 15, placed on the vent stack outlet 14, an aeriform effluent EA (for example, air) is continuously devolatilized - during the spray painting - from the booth 10 through the flooring 11, the air tube 13 and the vent stack 14 itself, to be dissolved in the outside environment. This aeriform effluent EA carries on some paint residues RV which have not been applied on the work piece WK.

According to this invention, the spray booth 10 is provided with a depuration device 10.1 of the aeriform effluent EA from the paint residues RV.

This device 10.1 includes, below the perforated flooring 11, a collection bed 16 formed by a huge number of solid bodies CS, which are adjacent and superimposed, preferably solid micro-particles (with average granulometry from 3 to 100 mesh), favourably micro-spheres, for example of glass-alluminium, boron or silicate, having high resistance from impact break (average diameter of micro-spheres varying for instance in a range from 0,1 to 10 mm.).

This solid particles collection bed 16 is suspended in the air tube 13 through a strong perforated support 16.1, for example a perforated wire net supported on the walls of booth 10, in order to be crossed by that effluent EA bringing the paint residues RV. During the crossing of the collection bed 16, the solid components (pigments) of the paint residues RV carried in the aeriform effluent EA deposit the solid bodies CS of the bed itself, so that the effluent, after having crossed bed 16, carries further on only the liquid components (solvents) of the paint residues RV.

In fig. 2, alpha indicates an upper layer or upstream (according to the flow direction of EA) of solid bodies CS in the collection bed 16, layer on which the solid components (pigments) of residues RV fall, while beta indicates a lower layer or downstream of bodies CS, provided only for functioning safety of the collection bed.

Downstream the collection bed 16 (according to the flow direction of effluent EA) in booth 10 there is an actived carbon filtering bed 17, itself suspended in the air tube 13 spaced out from flooring 12. The liquid components (solvents) of the paint residues RV carried by the aeriform effluent EA, crossing that filtering bed 17, are captured by actived carbons, so that the effluent itself is extracted from booth 10 through the vent stack 14-15 completely depurated.

When the collection bed 16 is exhausted by the solid pigments of paint residues RV deposited on the solid bodies CS, it is renewed and the solid bodies CS of the exhausted bed are set off to a regeneration device 18 (fig. 3).

This regeneration device 18 includes means of dimentional reduction 18.1 of possible solid bodies CS and overspray blocks, a mechanical centrifuge separator 19 and a mechanical sieve separator 20.

These means of dimentional reduction 18.1 (which in fig. 3 are schematized by a simple rectangle) have the function of crushing possible solid bodies CS and overspray blocks formed during the collection phase, in order to permit the further treatment. These means of dimentional reduction 18.1 are composed, for example, by a rotating crusher, in which a couple of motorized shafts, rotating in opposite directions, has fixed rings or circular blades opportunely placed out.

Crushed products are then brought in batches in this centrifuge separator 19. It includes a silo 21, in which solid bodies CS and overspray collected are subjected to centrifugation, through a fan centrifuge 22 immersed in the bulk of bodies and overspray and driven in rotation by an axial-shaft motor 23 - 23.1.

In the silo 21, solid bodies CS and overspray are vortically shaken, rubbing each other and against the silo wall 21.1, the axial shaft 23.1 and the fan centrifuge 22. In this way, the solid components (pigments) collected by the paint residues RV are completely removed from knock-proof solid bodies CS, and they separate in form of solid overspray (dusts). The clean solid bodies CS and the solid overspray removed from the bodies themselves come out from the centrifuge separator 19 mixed and are thus introduced in the mechanical sieve separator 20 (schematized in fig. 3 by a simple rectangle), where they are separated by mechanical sieving.

At the end of sieving, the solid bodies CS (which are clean and thus regenerated) are stored to be reused in a new collection bed, while the treated solid overspray (dust pigments) resulting from paint residues RV can be quantitatively and qualitatively analysed, before their discharge, or possible recycling, to determine exactly, for example, data concerning the pollution and/or toxicity of the paint process.

On the other hand, the filtering bed 17 is completely renewed when actived carbons composing it are exhausted. Those actived carbons are discharged or, preferably, reactivated.

The main advantages of the process and of the installation according to the present invention are as follows:
a) The solid bodies collection bed is practically regenerable and reusable in an unlimited way, while the industrial wastes to be treated are composed only by solid overspray (dusts) obtained at the end of sieving.
b) There is a substantial correspondence between the overspray collected on the solid bodies of the collection bed and the overspray obtained at the end of sieving: this permits precise controls, both quantitative and qualitative, according to the production cycle from which they originate.
c) The solid bodies collection bed presents limited and constant losses of pressure during the functioning of the installation, thus constantly ensuring the normal capacities of the effluents required for good functioning, as well as a constant and limited energy absorption.
d) The solid bodies collection bed acts as a filter even in the depth, distributing in a substantially homogeneous way the solid overspray in the whole work area. All that unlike common filters, where only the superficial and front part is saturated, according to the flow direction of effluents.

As results from all above-mentioned, the solid bodies CS have a mechanical collection function, that is they represent obstacles opposing to the flow of fluid effluents; on these obstacles overspray (both solid and liquid) deposits or adhere to, with proportional efficiency to the adhesiveness degree of the obstacles themselves. Overspray never has molecular dimensions.

The collection bed, instead, has an adsorbing function on fluid effluents at a molecular level for organic substances (for example solvents), even if it can also have a power of overspray interception. This interception , however, is to be avoided, as it involves the contemporary porosity occlusion of the adsorbent bodies of which it is composed; in these porosities, molecules of the organic substances are attracted and captured.

Examples of adsorbing bodies, besides actived carbons, are for instance zeolite and actived alumina.

Obviously many variations in practice could be introduced, comparing to all what described and illustrated by way of non-limiting example only, remaining in the ambit of this invention and thus of this industrial patent-right.

In the same way, even if it has been described and illustrated a solid bodies collection bed, substantially horizontal and crossed perpendicularly by an effluent flow, the solid collection bodies can form a fixed collection bed, however placed and oriented towards to flow direction of the effluents crossing it.

On the other hand, the process and the installation according to this invention, even if illustrated and described with reference to a painting process, can be applied in any technique field, in which the collection of solid and fluid polluting substances, pigments and/or overspray from fluid effluents is requested.

## Claims

1. Process of collection of solid and/or fluid polluting substances, pigments and/or overspray from liquid effluents, characterized in that it comprises at least one phase of collection, when these fluid effluents are conveyed through at least one fixed collection bed (16), formed by a huge number of adjacent solid bodies (CS), so that pigments and/or overspray, solid and/or liquid, contained in the effluents themselves are collected on these solid bodies (CS), at least in part, while these effluents pass through this fixed collection bed.

2. Process according to claim 1, characterized in that it comprises at least one further phase of adsorbing filtration, in which these fluid effluents, after the collection phase, pass through at least one adsorbing bodies filtering bed (17), where the residual polluting substances, pigments and/or overspray contained in the effluents themselves are adsorbed, at least in part.

3. Process according to claim 1, characterized in that this collection bed (16) is formed by distributing at least one layer of adjacent solid bodies (CS), preferably solid micro-particles, favourably micro-spheres, on a support permeable by these fluid effluents.

4. Process according to claim 2, characterized in that this collection bed is formed by distributing at least one layer of adsorbing bodies on a support permeable by these fluid effluents.

5. Process according to claim 1, characterized in that the solid bodies (CS) of an exhausted collection bed (16) are regenerated, by separation of the polluting substances, pigments and/or overspray deposited on their surface, and these regenerated solid bodies are then reused to form a new collection bed.

6. Process according to claim 5, characterized in that those solid collection bodies (CS) are regenerated, undergoing a mechanical treatment which determines the separation of polluting substances, pigments and/or overspray, deposited on the surface of these solid bodies, from the solid bodies themselves.

7. Process according to claim 5 or 6, characterized in that, after the separation of the polluting substances, pigments and/or overspray from the surface of the solid collection bodies (CS), these overspray and solid bodies undergo a sieving treatment, at the end of which the regenerated solid bodies are destinated to a further use, while the polluting substances, pigments and/or overspray, separated from the solid bodies, are in case examined and/or measured, and then discharged as industrial wastes or, in case, recycled.

8. Process according to claim 5, characterized in that, before the separation treatment, the possible blocks of solid bodies (CS) and of polluting substances, pigments and/or overspray, formed during the collection phase, undergo a dimentional reduction treatment.

9. Process according to claim 8, characterized in that this dimentional reduction treatment includes the crushing of these blocks.

10. Process according to one or more above mentioned claims, for the collection of polluting substances, pigments and/or overspray, solid and/or liquid, from fluid effluents in a spray booth (10), characterized in that it comprises at least one phase of collection of these polluting substances, pigments and/or overspray, through at least one solid bodies (CS) collection bed (16), through this collection bed an aeriform effluent (EA), containing the paint residues which have not been applied on the work piece (WP), is devotilized, so that the polluting substances, pigments and/or overspray contained in these paint residues are collected, at least in part, by the solid bodies (CS) of this fixed collection bed (16).

11. Process according to claim 10, characterized in that it comprises, after this collection phase, at least one phase of adsorbing filtration, through at least one adsorbing bodies filtration bed (17), placed downstream of this collection bed (16) (according to the flow direction of the effluent EA) and through which is devolitilized this aeriform effluent (EA) containing the paint residues which have not been collected by the solid bodies (CS) of the fixed collection bed (16), so that the organic substances contained in these paint residues are adsorbed, at least in part.

12. Installation for the realization of the collection process of polluting substances, pigments and/or overspray, solid and/or liquid, from fluid effluents according to claim 1, characterized in that it comprises at least one adjacent solid bodies (CS) collection bed (16), formed preferably by at least one layer of solid micro-particles, favourably micro-spheres, on a support permeable by these fluid effluents, which pass through this collection bed, so that the polluting substances, pigments and/or overspray, solid and/or liquid, contained in the effluents themselves are collected, at least in part, on these solid bodies (CS).

13. Installation according to claim 12, characterized in that these solid bodies (CS) comprise micro-particles, having average granulometry from 3 to 100 mesh.

14. Installation according to claim 12, characterized in that these solid bodies (CS) include micro-spheres having average diameter substantially from 0,1 and 10 mm.

15. Installation according to any of the claims from 12 to 14, characterized in that these solid bodies (CS) have high resistance from impact break.

16. Installation according to claim 15, characterized in that these solid bodies (CS) are made of glass-alluminium, boron or silicate.

17. Installation according to claim 12, characterized in that this adjacent solid bodies (CS) collection bed (16) includes ( with reference to the flow direction of the fluid efflents) an upper layer or upstream (alpha) of solid bodies, where the polluting substances, pigments and/or overspray are collected by a mechanical filter working even in the depth, and a lower layer or downstream (beta) of solid bodies, provided for safety of the functionning of the collection bed itself.

18. Installation according to claim 12 for the realization of the process according to claim 2, characterized in that it comprises at least one adsorbing bodies filtration bed (17), placed downstream this solid bodies fixed collection bed (16) (with reference to the flow direction of the fluid effluents) and through which these fluid effluents pass after the collection phase, in order to have on them an adsorbing action to a molecular level for the organic substances there contained.

19. Installation according to claim 18, characterized in that this adsorbing bodies collection bed (17) includes actived carbons and/or zeolite and/or actived alumina.

20. Installation according to claim 12, for the collection of polluting substances, pigments and/or overspray, solid and/or fluid, from fluid effluents, in a spray booth (10), characterized in that it comprises at least one solid bodies (CS) collection bed (16), through which an aeriform effluent (EA) containing the paint residues not applied on the work pieces (WP) is devolatilized, so that the polluting substances, pigments and/or overspray of these paint residues are captured, at least in part, falling on the solid bodies (CS) of this collection bed (16).

21. Installation according to claims 20 and 18, characterized in that it also comprises at least one adsorbing bodies filtration bed (17), placed downstream this collection bed (16) (according to the flow direction of the effluent EA) and through which this aeriform effluent containing the paint residues which have not been collected on the solid bodies (CS) of this collection bed (16) is devolatilized, so that the organic substances contained in these paint residues are adsorbed, at least in part, by this filtration bed.
